# EUROPEAN PATENT APPLICATION

(11) **EP 4 354 602 A1**
(43) Date of publication of application: **17.04.2024**
(21) Application number: 22818604.5
(22) Date of filing: 27.10.2022
(51) Int. Cl.: H01M 50/107, H01M 50/152

(54) **CYLINDRICAL BATTERY AND BATTERY PACK**

(30) Priority: 17.06.2022 CN 202221526606 U
(71) Applicant: Eve Power Co., Ltd., Jingmen, Hubei 448000 (CN)
(72) Inventor: Li, Shangyi, (CN); HUANG, Liming, (CN); Yue, Liangliang, (CN)
(74) Representative: Murgitroyd & Company
(86) International application number: PCT/CN2022/127930
(87) International publication number: WO 2023/240886

(57) **Abstract**

A cylindrical battery and a battery pack are provided in embodiments of the application, which relates to the field of battery technology. The cylindrical battery includes a housing, a first end cover, a second end cover, a battery cell, and a pole post. The battery cell is accommodated in the housing, and the first end cover and the second end cover seal at ends of the housing, respectively. The pole post is connected with the battery cell and extended through the first end cover. The pole post is cylindrical, a diameter of the pole post is Φ1, and a diameter of the first end cover is Φ2, wherein Φ1/Φ2≤34%, and Φ1≥12mm.

## Description

### CROSS-REFERENCE TO RELATED APPLICATION

This application claims priority to Chinese Patent Application No. 202221526606.5 filed on June 17, 2022. The content of the aforementioned application, is incorporated herein by reference.

### TECHNICAL FIELD

The present disclosure relates to the field of battery technology, for example, relates to a cylindrical battery and a battery pack.

### BACKGROUND OF THE DISCLOSURE

In related technologies, a battery pack includes a plurality of cylindrical batteries. A busbar is electrically connected to pole posts of the cylindrical batteries, thus, the plurality of cylindrical batteries are connected in series or parallel. However, with use of the cylindrical batteries, battery cells in the cylindrical batteries expand in heights, which affects connection effect between the pole posts and the busbar, and further affects electrical connection effect between the cylindrical batteries in the battery pack, thereby reducing a reliability of the battery pack.

Therefore, a cylindrical battery and a battery pack are urgently needed to solve the above problems.

### SUMMARY

A cylindrical battery and a battery pack are provided in the disclosure to prevent connection effect between a pole post and a busbar from being affected due to heights raising of a battery cell in the cylindrical battery, so as to improve the electrical connection effect between cylindrical batteries in the battery pack, and to improve a reliability of the battery pack.

In a first aspect, a cylindrical battery is provided in embodiments of the application. The cylindrical battery includes a housing, a first end cover, a second end cover, a battery cell, and a pole post, the battery cell is accommodated in the housing, and the first end cover and the second end cover seal both ends of the housing, respectively, wherein the pole post is connected to the battery cell and drills through the first end cover, the pole post is cylindrical, a diameter of the pole post is Φ1, and a diameter of the first end cover is Φ2, wherein Φ1/Φ2 ≤ 34%, and Φ1 ≥ 12 mm.

In an embodiment, the housing includes a body portion and a bent structure, wherein the bent structure is bent from an outer periphery of the body portion towards inside of the body portion, the bent structure includes a first bent portion close to the first end cover, a second bent portion close to the second end cover, and a third bent portion connecting the first bent portion and the second bent portion, the first bent portion abuts against an end of the battery cell, a maximum width of the bent structure along a length direction of the housing is D, wherein 0.2 mm ≤ D ≤ 0.5 mm.

In an embodiment, the first bent portion and the second bent portion define an opening towards outside of the body portion, a width of the opening along the length direction of the housing is L, wherein 0.3 mm ≤ L ≤ 0.8 mm.

In an embodiment, a distance between an outer end face of the first end cover and an outer end face of the second end cover is H1, a distance between the outer end face of the first end cover and a top portion defined by the first bent portion and the body portion and the outer end face of the first end cover is H2, and H2/H1 ≥ 95%.

In an embodiment, the bent structure is inclined from a side close to the second end cover to a side close to the first end cover.

In an embodiment, the battery cell and the second end cover are spaced from each other, a distance between the outer end face of the second end cover and a top portion defined by the first bent portion and the body portion and an outer end face of the second end cover is H3, and 2.5 mm ≤ H3 ≤ 3.5 mm.

In an embodiment, the housing further includes a folded edge bent from an end of the body portion towards inside of the body portion, and the second end cover is sandwiched between the folded edge and the bent structure.

In an embodiment, a thickness of the first end cover is σ1, a thickness of the housing is σ2, wherein 0.3 mm ≤ σ2 ≤ 0.5 mm, and 0.7 mm ≤ σ1 ≤ 1.2 mm.

In an embodiment, a chamfer with an arc is defined between an outer end face of the first end cover and an outer wall of the first end cover, a radius of the outer end face is a, and a radius of the outer wall is b, wherein, 1 mm ≤ a ≤ 1.7 mm, and 0.4a ≤ b ≤ 0.55a; and/or
a filleted corner with a radius R is defined between an inner end face of the first end cover and an inner wall of the first end cover, wherein 0.5 mm ≤ R ≤ 1.2 mm.

In a second aspect, a battery pack is provided in embodiments of the application, including the cylindrical battery as described above.

An embodiment of this disclosure achieves an advantageous effect that:

According to the cylindrical battery and the battery pack provided in the application, a ratio of a cross-sectional area of the pole post to a cross-sectional area of the first end cover can be controlled by controlling a ratio of the diameter of the first end cover to the diameter of the pole post. The ratio of the cross-sectional area of the pole post to the cross-sectional area of the first end scover is reduced as far as possible, so as to prevent the pole post from extending through the first end cover and affecting a structural strength of the first end cover due to an oversize of the pole post. When the battery cell expands in height, a deformation of the first end cover is reduced, and a deformation of the pole post is reduced along with the first end cover. The pole post is ensured to be planar, thus reducing an impact on an electrical connection effect between the pole post and the busbar. According to theoretical calculation and test verification, a flatness tolerance value of an end face of a pole post can be effectively reduced by controlling Φ1/Φ2 ≤ 34%. When the diameter of the pole post is greater than 12 mm, an area of a connection region between the pole post and the busbar can be ensured, and a welding efficiency and a welding effect can be ensured, thus improving the connection reliability. By limiting a size of the pole post and a ratio of the size of the pole post to a size of the first end cover, the connection effect between cylindrical batteries is improved, and a connection reliability is improved in the embodiments.

### BRIEF DESCRIPTION OF THE DRAWINGS

FIG. 1 is a schematic sectional diagram of a cylindrical battery provided by an embodiment of the present disclosure.
FIG. 2 is an enlarged view of A in FIG. 1.
FIG. 3 is an enlarged view of B in FIG. 1.

### reference numerals:

1, housing; 11, body portion; 12, bent structure; 121, first bent portion; 122, second bent portion; 123, third bent portion; 12A, opening; 13, folded edge;
2, first end cover; 3, second end cover; 4, battery cell; 5, pole post; 6, sealing ring.

### DETAILED DESCRIPTION OF THE EMBODIMENTS

In description of the present disclosure, unless otherwise specified and defined, terms "connected" and "fixed" should be understood in a broad sense, for example, it may be a fixed connection, a detachable connection, or a whole; it may be a mechanical connection or an electrical connection; it may be a directly connection or an indirectly connection through an intermediate media; and it may be an internal connection of two components or an interaction relationship between two components. For those skilled in the art, meanings of the above terms in the present disclosure can be understood according to situations.

In the present disclosure, unless otherwise specified and defined, a first feature is disposed "on" or "under" a second feature may include a direct contact between the first feature and the second feature, or a contact between the first feature and the second feature through other features rather than the direct contact. Moreover, that the first feature is disposed "above" or "up" the second feature includes that the first feature is directly above or obliquely above the second feature, or only indicate that a horizontal height of the first feature is greater than a horizontal height of the second feature. That the first feature is disposed "below", "under", or "underneath" of the second feature include that the first feature is directly below or obliquely below the second feature, or only indicate that the horizontal height of the first feature is less than the horizontal height of the second feature.

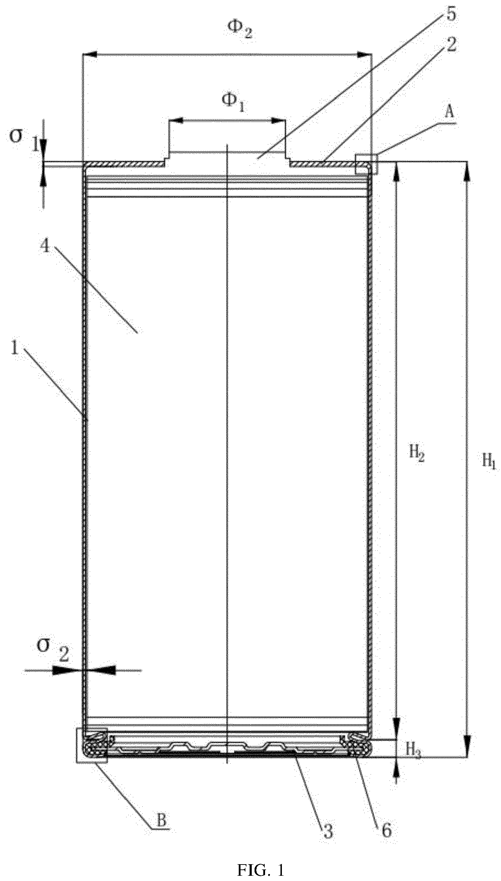

A cylindrical battery is provided in an embodiment of the disclosure. As shown in FIG. 1, the cylindrical battery includes a housing 1, a first end cover 2, a second end cover 3, a battery cell 4, and a pole post 5. The battery cell 4 is accommodated in the housing 1, and the first end cover 2 and the second end cover 3 seal ends of the housing 1, respectively. The pole post 5 is connected with the battery cell 4 and extends through the first end cover 2, and the pole post 5 is cylindrical. A diameter of the pole post 5 is Φ1, and a diameter of the first end cover 2 is Φ2, wherein Φ1/Φ2 ≤ 34%, and Φ1 ≥ 12 mm.

A ratio of a cross-sectional area of the pole post 5 to a cross-sectional area of the first end cover 2 can be controlled by controlling a ratio of the diameter of the first end cover 2 to the diameter of the pole post 5. The ratio of the cross-sectional area of the pole post 5 to the cross-sectional area of the first end scover 2 is reduced as far as possible, so as to prevent the pole post 5 from extending through the first end cover 2 and affecting a structural strength of the first end cover 2 due to an oversize of the pole post 5. When the battery cell 4 expands in height, a deformation of the first end cover 2 is reduced, and a deformation of the pole post 5 is reduced along with the first end cover 2. The pole post 5 is ensured to be planar, thus reducing an impact on an electrical connection effect between the pole post and the busbar. According to theoretical calculation and test verification, a flatness tolerance value of an end face of a pole post can be effectively reduced by controlling Φ1/Φ2≤34%. When the diameter of the pole post 5 is greater than 12 mm, an area of a connection region between the pole post 5 and the busbar can be ensured, and a welding efficiency and a welding effect can be ensured, thus improving the connection reliability. By limiting a size of the pole post 5 and a ratio of the size of the pole post 5 to a size of the first end cover 2, the connection effect between cylindrical batteries is improved, and a connection reliability is improved in the embodiments.

In another embodiment, the battery may also be of another shapes, and the radio of the size of the pole post 5 to the size of the first end cover 2 may be adaptively designed according to an actual situation.

For example, the housing 1, the first end cover 2, and the second end cover 3 are all made of steel, which has good stiffness, so that deformation resistances of the housing 1, the first end cover 2 and the second end cover 3 can be improved.

For example, the first end cover 2 and the second end cover 3 may be separated from the housing 1. Alternatively, one of the first end cover 2 and the second end cover 3 may be integrated with the housing 1, and the other may be separated with the housing 1.

Since the pole post 5 extends through the first end cover 2, the structural strength of the first end cover 2 is affected. For example, as shown in FIG. 1, a thickness of the first end cover 2 is σ1, and a thickness of the housing 1 is σ2, wherein σ2 <σ1. The structural strength and the deformation resistance of the first end cover 2 are ensured by increasing its thickness. For example, 0.3 mm ≤ σ2 ≤ 0.5 mm, and 0.7 mm ≤ σ1 ≤ 1.2 mm.

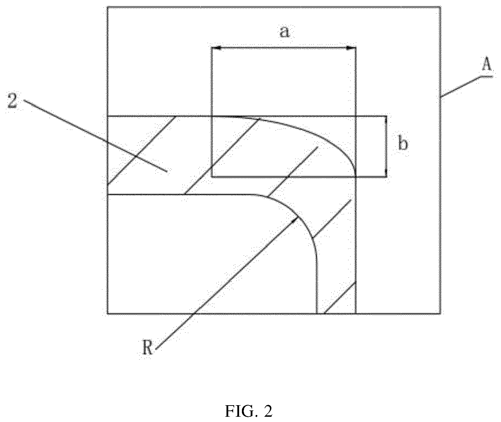

The battery cell 4 expands in height with use, which reduces a flatness of a shoulder between the pole post 5 and the first end cover 2. As shown in FIG. 2, for example, a chamfer with an arc is defined between an outer end face of the first end cover 2 and an outer wall of the first end cover 2. A radius of the outer end face is a, and a radius of the outer wall is b, where 1 mm ≤ a ≤ 1.7 mm, and 0.4 a ≤ b ≤ 0.55 a. By providing the chamfer with the arc, an anti-deformation performance of the first end cover 2 is improved and a stress concentration caused by a height expanding of the battery cell 4 is effectively avoided, thus ensuring the flatness of the end face of the pole post 5. Values of a and the b may be adaptively selected according to an actual situation. The value of a is avoided from setting too large to affect the structural strength, and too small to reduce the stress concentration effect and the anti-deformation performance.

For example, as shown in FIG. 2, a filleted corner with a radius R is defined between an inner end face and an inner wall of the first end cover 2 to facilitate forming the first end cover 2, wherein 0.5 mm ≤ R ≤ 1.2 mm. R may be adaptively selected according to the size of the cylindrical battery, so as to avoid reducing an internal space due to too large size, and avoid inconveniently forming and failure to reduce the stress concentration effect due to too small size.

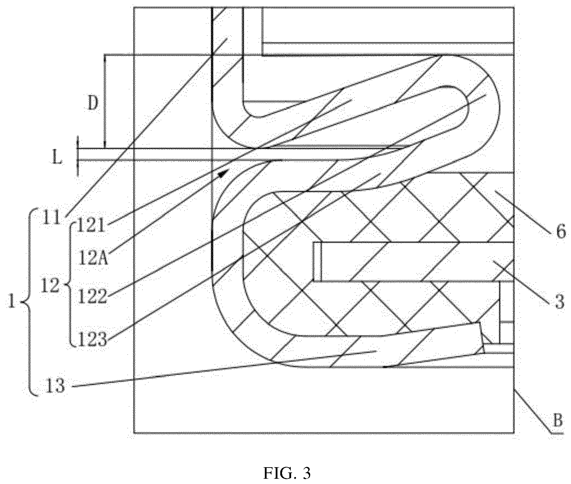

For example, as shown in FIG. 2 and FIG. 3, the housing 1 includes a body portion 11 and a bent structure 12, wherein the bent structure 12 is bent from an outer periphery of the body portion 11 towards inside of the body portion 11. The bent structure 12 includes a first bent portion 121 close to the first end cover 2, a second bent portion 122 close to the second end cover 3, and a third bent portion 123 connecting the first bent portion 121 and the second bent portion 122. The first bent portion 121 abuts against an end of the battery cell 4 to increase internal installation firmness of the battery cell 4, thereby improving seismic resistance of the cylindrical battery and the battery pack including the cylindrical battery. For example, the first bent portion 121 and the second bent portion 122 may be parallel or included an angle. The first bent portion 121, the second bent portion 122 and the third bent portion 123 may be of different shapes, so that the bent structure 12 may be of different shapes, which is not limited herein. A maximum width of the bent structure 12 along a length direction of the housing 1 is D, wherein 0.2 mm≤D≤0.5 mm, which improves the structural strength of the bent structure 12, and further improves reliability of supporting the battery cell 4, and improves the seismic resistance.

For example, as shown in FIG. 3, the first bent portion 121 and the second bent portion 122 define an opening 12A towards outside of the body portion 11, the housing 1 and the battery cell 4 in a same batch may have dimensional tolerance. The opening 12A is provided to facilitate controlling an overall dimension of the housing 1, and improving applicability of battery cell 4 with different heights and diameter dimensions. During fixation of the cylindrical batteries, the opening 12A can be configured to limit position, which reduces fixation difficulty of the cylindrical batteries. A width of the opening 12A along the length direction of the housing 1 is L, wherein 0.3 mm ≤ L ≤ 0.8 mm.

For example, as shown in FIG. 1, a distance between an outer end face of the first end cover 2 and an outer end face of the second end cover 3 is H1, a distance between the outer end face of the first end cover 2 and a top portion defined by the first bent portion 121 and the body portion 11 is H2, wherein H2/H1 ≥ 95%, which can ensure energy density of the battery.

During the use of a lithium-ion battery, decomposition of an electrolyte, and rupture and reconstruction of SEI film of the battery cell 4 all produce gas, which causes the cylindrical battery to expand. Service life of a power battery is generally more than 10 years, and internal pressure of a steel shell ternary lithium battery reaches above 1.0 MPa at an end of its service life. For example, as shown in FIG 3, the bent structure 12 is inclined from a side close to the second end cover 3 to a side close to the first end cover 2, so as to increase a gap between the battery cell 4 and the housing 1 and a gap between the battery cell 4 and the second end cover 3 to accommodate generated gas. The internal pressure of the battery cell 4 is effectively reduced, the safety of the battery cell 4 is ensured, and a risk where the battery cell 4 is disconnected from an electric connection position due to air pressure is reduced.

For example, as shown in FIG. 3, the battery cell 4 and the second end cover 3 spaced with each other. A distance between an outer end face of the second end cover 3 and a top portion defined by the first bent portion 121 and the body portion 11 is H3, wherein 2.5 mm ≤ H3 ≤ 3.5 mm, which can provide a gas storage space of 6.5 mL to 9.5 mL to satisfy a storage space when the cylindrical battery produces a maximum amount of gas. The safety problem of the battery cell 4 caused by an increase of an internal air pressure of the cylindrical battery is solved, and the reliability is improved. By providing shapes of the bent structure 12 and a reasonable layout of an internal space for holding the battery cell 4 of the cylindrical battery, the safety of the battery cell 4 is improved and the service life of the battery cell 4 is extended.

For example, as shown in FIG. 3, the housing 1 further includes a folded edge 13 bent from an end of the body portion 11 towards inside of the body portion 11, and the second end cover 3 is sandwiched between the folded edge 13 and the bent structure 12 for limiting position of the second end cover 3 along a length direction of the housing 1, which improves installation accuracy and installation stability of the second end cover 3, thereby improving the seismic resistance of the cylindrical battery.

For example, as shown in FIG. 3, the cylindrical battery further includes a sealing ring 6, and the sealing ring 6 is arranged between the second end cover 3 and the housing 1 to ensure a sealing connection between the second end cover 3 and the housing 1. In this embodiment, the sealing ring 6 is sleeved on an outer periphery of the second end cover 3, wherein the second bent portion 122, the body portion 11 and the folded edge 13 define an installation groove, and the sealing ring 6 and the second end cover 3 are clamped in the installation groove.

The embodiment further provides a battery pack, and the battery pack includes the above cylindrical battery. By controlling the ratio of the diameter of the first end cover 2 to the diameter of the pole post 5, the ratio of the cross-sectional area of the pole post 5 to the cross-sectional area of the first end scover 2 is reduced as much as possible. When the cylindrical battery expands, the deformation of the first end cover 2 is reduced and the deformation of the pole post 5 is reduced along with the first end cover 2, thus reducing the impact on the electrical connection between the pole post 5 and the busbar, and ensuring that the cross-sectional area of the pole post 5 is not less than 12 mm. The contact area between the pole post 5 and the busbar is ensured and the connection reliability is improved. By limiting the size of the pole post 5 and the ratio of the size of the pole post 5 to the size of the first end cover 2, the connection effect between the cylindrical batteries is improved and the reliability of the battery pack is improved.

## Claims

1. A cylindrical battery, comprising a housing (1), a first end cover (2), a second end cover (3), a battery cell (4), and a pole post (5), wherein the battery cell (4) is accommodated in the housing (1), and the first end cover (2) and the second end cover (3) seal at ends of the housing (1), respectively, wherein the pole post (5) is connected to the battery cell (4) and drills through the first end cover (2), the pole post (5) is cylindrical, a diameter of the pole post (5) is Φ1, and a diameter of the first end cover (2) is Φ2, wherein Φ1/Φ2≤ 34%, and Φ1 ≥ 12 mm.

2. The cylindrical battery of claim 1, wherein the housing (1) comprises a body portion (11) and a bent structure (12), wherein the bent structure (12) is bent from an outer periphery of the body portion (11) towards inside of the body portion (11), and the bent structure (12) comprises a first bent portion (121) close to the first end cover (2), a second bent portion (122) close to the second end cover (3), and a third bent portion (123) connecting the first bent portion (121) and the second bent portion (122), wherein the first bent portion (121) abuts against an end of the battery cell (4), and a maximum width of the bent structure (12) along a length direction of the housing (1) is D, wherein 0.2 mm≤ D ≤ 0.5 mm.

3. The cylindrical battery of claim 2, wherein the first bent portion (121) and the second bent portion (122) define an opening (12A) facing outside of the body portion (11), a width of the opening (12A) along the length direction of the housing (1) is L, wherein 0.3 mm ≤ L ≤ 0.8 mm.

4. The cylindrical battery of claim 2, wherein a distance between an outer end face of the first end cover (2) and an outer end face of the second end cover (3) is H1, a distance between the outer end face of the first end cover (2) and a top portion defined by the first bent portion (121) and the body portion (11) is H2, and H2/H1 ≥95%.

5. The cylindrical battery of claim 2, wherein the bent structure (12) is inclined from a side close to the second end cover (3) to a side close to the first end cover (2).

6. The cylindrical battery of claim 5, wherein the battery cell (4) and the second end cover (3) are spaced from each other, a distance between the outer end face of the second end cover (3) and a top portion defined by the first bent portion (121) and the body portion (11) is H3, and 2.5 mm ≤ H3 ≤ 3.5 mm.

7. The cylindrical battery of claim 2, wherein the housing (1) further comprises a folded edge (13) bent from an end of the body portion (11) towards inside of the body portion (11), and the second end cover (3) is sandwiched between the folded edge (13) and the bent structure (12).

8. The cylindrical battery of any one of claim 1 to claim 7, wherein a thickness of the first end cover (2) is σ1, and a thickness of the housing (1) is σ2, wherein 0.3 mm ≤ σ2 ≤ 0.5 mm, and 0.7 mm ≤ σ1 ≤ 1.2 mm.

9. The cylindrical battery of any one of claim 1 to claim 7, wherein a chamfer with an arc is defined between an outer end face of the first end cover (2) and an outer wall of the first end cover (2), a radius of the outer end face is a, and a radius of the outer wall is b, wherein, 1 mm ≤ a ≤ 1.7 mm, and 0.4a ≤ b ≤ 0.55a; and/or a filleted corner with a radius R is defined between an inner end face of the first end cover (2) and an inner wall of the first end cover (2), wherein 0.5 mm ≤ R ≤ 1.2 mm.

10. A battery pack, comprising the cylindrical battery of any one of claim 1 to claim 9.
